(19)

Europäisches
Patentamt
European
Patent Office
Office européen
des brevets

(11) **EP 3 413 079 A1**

(12) **EUROPEAN PATENT APPLICATION**
published in accordance with Art. 153(4) EPC

(43) Date of publication:
**12.12.2018 Bulletin 2018/50**

(21) Application number: **17747381.6**

(22) Date of filing: **31.01.2017**

(51) Int Cl.:
**G01S 7/481** (2006.01)  **G02B 26/12** (2006.01)

(86) International application number:
**PCT/JP2017/003329**

(87) International publication number:
**WO 2017/135225 (10.08.2017 Gazette 2017/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.02.2016 JP 2016018722**

(71) Applicant: **Konica Minolta, Inc.
Tokyo 100-7015 (JP)**

(72) Inventor: **NOGUCHI Kazutaka
Tokyo 100-7015 (JP)**

(74) Representative: **Henkel, Breuer & Partner
Patentanwälte
Maximiliansplatz 21
80333 München (DE)**

(54) **OBJECT DETECTION DEVICE OF OPTICAL SCANNING TYPE**

(57)     Provided is a compact object detection device
of the optical scanning type which is capable of effectively
reflecting a light beam. An object detection device of the
optical scanning type, wherein: a light beam emitted by
a light source is reflected by a first mirror surface, and
thereafter, is reflected by a second mirror surface and
scanned and projected as a result of rotation by the mirror
unit; a portion of the light beam that is scattered by an
object from the scanned and projected light beam is re-
flected by the second mirror surface, and thereafter, is
reflected by the first mirror surface and is incident on a
light-receiving element; a comparison on the first mirror
surface reveals that the surface area of the light beam
scattered by the object and incident on the light-receiving
element is greater than the surface area of the scanned
and projected light beam; and the angle of incidence
$\theta inc(°)$ of the light beam emitted from the light source
relative to the first mirror surface satisfies this formula.
$\theta/2-7<\theta inc<\theta/2+11$ (1) therein, $\theta$ is the crossing angle (°)
between the first and second mirror surfaces.

**FIG.3**

EP 3 413 079 A1

**Description**

**Technical Field**

The present invention relates to an optical scan type object detecting apparatus capable of detecting an object located far away.

**Background Art**

In recent years, in the fields, such as a car and an aircraft, in order to detect obstacles existing forward in the proceeding direction, for example, an optical scan type object detecting apparatus has been developed and already put into actual use, which emits a laser light flux while scanning, receives a reflected light flux reflected by hitting objects, and acquires information on obstacles on the basis of a time difference between the time of emitting the laser light flux and the time of receiving the reflected light flux.

Such an object detecting apparatus, in addition to the detection of obstacles of a moving body as mentioned above, can be applied to a crime prevention use in which the apparatus is installed under the eaves of a building so as to detect suspicious persons and to a geographical feature investigation use in which the apparatus is mounted on a helicopter, an airplane, etc. so as to acquire geographical information from the sky. Furthermore, the apparatus can be applied to a gas detection use to measure gas concentration in atmospheric air.

In a general optical scan type object detecting apparatus, a light projecting system is constituted by a laser diode serving as a light source and a collimating lens, and a light receiving system is constituted by a light receiving lens (or mirror) and a light detecting element such as a photodiode. Moreover, a reflective mirror equipped with a reflective surface is disposed between the light projecting system and the light receiving system. In such a laser scanning type object detecting apparatus, a light flux emitted from the light projecting system is projected so as to scan by the rotation of the reflective mirror, whereby there is a merit that it is possible to measure an object two-dimensionally in a wide range, not only one point. In this connection, as a light source, an LED etc.
may be used other than a laser.

In the case where a laser light source is taken for an example, as a general scanning technique of a laser light flux, a technique has been known that makes a laser light flux scan by projecting the laser light flux onto a mirror or a polygon mirror with a plurality of mirror surfaces and by rocking the mirror or rotating the polygon mirror.

Patent Literature 1 discloses a constitution that a first mirror surface and a second mirror surface are formed with a nipping angle of 90 degrees in a rotation mirror, and a light flux emitted from a light source along a direction orthogonal to a rotation axis is made to scan by being reflected two times by the first mirror surface and the second mirror surface, whereby the disturbance of a scanning line is not caused even if the rotation axis is made to incline due to rotational deflection. Moreover, Patent Literature 2 discloses a laser radar that can scan on a plurality of different sub-scanning positions during one rotation by arranging a plurality of pairs of a first mirror and a second mirror and changing an intersecting angle between the first mirror and the second mirror for each pair.

**Citation List**

**Patent Literature**

PTL 1: JP S50-109737A
PTL 2: WO2014/168137A

**Summary of Invention**

**Technical Problem**

By the way, as shown in Patent Literature 2, in the case of arranging a plurality of pairs of a first mirror and a second mirror, changing an intersecting angle between the first mirror and the second mirror for each pair, and performing scanning on a plurality of different sub-scanning positions during one rotation, there exists an optimal incident angle of a light flux emitted from a light source relative to the first mirror for each mirror pair. However, in the case where the first mirror and the second mirror are shaped in the same form and an incident angle is different from the optimal angle, some of scattered light coming from an object and reflected by the second mirror are not reflected by the first mirror and do not reach a light receiving element. That is, so-called light missing (light leakage) occurs, and, since a region not used for signal reception exists on the mirror surface, the efficiency is bad. In particular, as the area of a light flux on a mirror surface is larger, a rate of occurrence of light ray missing in which some of a light flux is chipped, becomes higher. As one technique to solve such a problem, it may be considered that the surface of a mirror is increased so as not to cause occurrence of light missing. However, the increasing of the surface leads to increasing in the size of the constitution, which causes a new problem.

The present invention has been achieved in view of the above-mentioned circumstances, and an object of the present invention is to provide an optical scan type object detecting device that can reflect a light flux effectively while being small.

**Solution to Problem**

In order to realize at least one of the above-mentioned object, an optical scan type object detecting apparatus reflecting one aspect of the present invention includes:

a mirror unit in which a first mirror surface and a second mirror surface are formed so as to incline in a direction to intersect with a rotation axis and to face each other at a predetermined angle; a light source; and a light receiving element,
wherein a light flux emitted from the light source is reflected by the first mirror surface, thereafter, is reflected by the second mirror surface, and is projected so as to scan by rotation of the mirror unit,
a part of a light flux scattered by an object among the light flux projected so as to scan is reflected by the second mirror surface, thereafter, is reflected by the first mirror surface, and is received by the light receiving element, and
wherein an area of the light flux scattered by the object and received by the light receiving element becomes larger than an area of the light flux projected so as to scan, in comparison of each other on the first mirror surface, and an incident angle $\theta$ inc (degrees) of the light flux emitted from the light source relative to the first mirror surface satisfies a formula (1) shown below.

$$\theta/2 - 7 < \theta \, \text{inc} < \theta/2 + 11 \qquad (1)$$

provided that, $\theta$: an intersecting angle (degrees) formed by the first mirror surface and the second mirror surface

**Advantageous Effects of Invention**

According to the present invention, it is possible to provide an optical scan type object detecting device that can reflect a light flux effectively while being small.

**Brief Description of Drawings**

[Fig. 1] Fig. 1 is a schematic illustration showing a state where a laser radar as an optical scan type object detecting apparatus according to the present embodiment is mounted on a vehicle.
[Fig. 2] Fig. 2 shows a cross section of a laser radar LR according to the present embodiment.
[Fig. 3] Fig. 3 is a perspective view showing a main part except a casing of a laser radar LR according to the present embodiment.
[Fig. 4] Fig. 4 is an illustration showing a state of scanning within a detection rage G of a laser radar LR with a laser spot light flux SB (indicated with hatching) emitted correspondingly to the rotation of a mirror unit MU.
[Fig. 5] Fig. 5 is a cross sectional view that passes through the rotation axis line RO of the mirror unit MU of the present embodiment.
[Fig. 6] Fig. 6 is a schematic diagram showing the first mirror surface M1 and the second mirror surface M2 in a state of projecting them in the rotation axis line RO direction.
[Fig. 7] Fig. 7 is a graph showing the effective efficiency of a mirror taken on the longitudinal axis and a deviation from an optimal incident angle ($\theta/2$) taken on the transverse axis.

**Description of Embodiments**

Hereinafter, an embodiment of the present invention will be described with reference to the attached drawings.

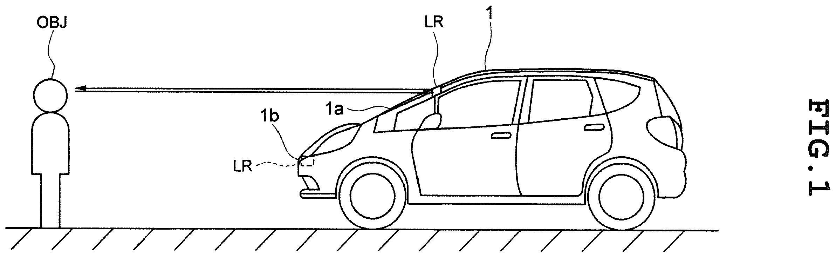

Fig. 1 is a schematic illustration showing a state where a laser radar as an optical scan type object detecting apparatus according to the present embodiment is mounted on a vehicle. A laser radar LR in the present embodiment is disposed on the inside at the upper end of a front window 1a of a vehicle 1. However, it may be disposed on the outside of the vehicle (such as the back of a front grille 1b, etc.) other than it.

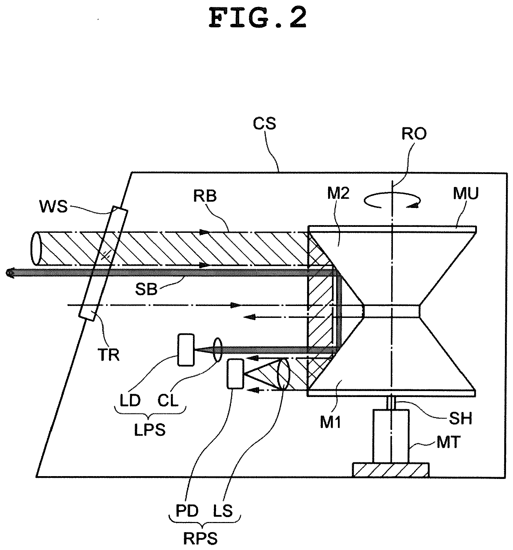

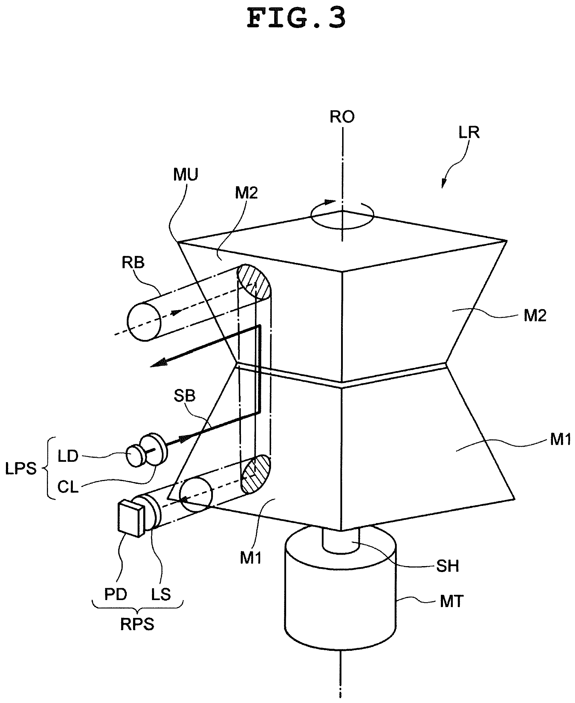

Fig. 2 shows a cross section of the laser radar LR according to the present embodiment, and although Fig. 3 is a perspective view showing a main part except a casing of the laser radar LR according to the present embodiment, the shape, length, and so on of constitution components may be different from the actual configuration. The laser radar LR is accommodated in the inside of a casing CS as shown in Fig. 2. On a side portion of the casing CS, a window portion WS through which a light flux can be enter and exit, is formed, and the window portion WS is constituted by a transparent plate TR, such as resin.

As shown in Fig. 2 and Fig.3, the laser radar LR includes, for example, a pulse type semiconductor laser (light source) LD that emits a laser light flux; a collimating lens CL that narrows the divergent angle of a diverging light flux from the semiconductor laser LD and converts into an approximately parallel light flux; a mirror unit that projects a laser light flux made approximately parallel by the collimating lens CL so as to scan toward an object OBJ side (Fig. 1) by rotating mirror surfaces and reflects scattered light from the object OBJ having been scanned with the projected light flux; a lens LS that collects the scattered light having come from the object OBJ and having been reflected on the mirror unit MU; and a photodiode (light receiving element) PD that receives the light collected by the lens LS.

The semiconductor laser LD and the collimating lens CL constitute a light projecting system LPS, and the lens LS and the photodiode PD constitute a light receiving system RPS. The optical axis of each of the light projecting system LPS and the light receiving system RPS is approximately orthogonal to the rotation axis RO of the mirror unit MU, and both the optical axes are parallel to each other.

The mirror unit MU has a configuration like that two quadrangular pyramids are jointed in the respective reverse directions to each other and made in one body. That is, it is a so-called two-time reflection type that includes four pairs of mirror surfaces M1 and M2 pared and inclined in a direction so as to face each other. The intersecting angle between the mirror surfaces M1 and M2 is different for each pair. It is preferable that the mirror surfaces M1 and M2 inclined in the direction intersecting relative to the rotation axis RO are formed by vapor-depositing a reflection film onto the surface of a resin material (for example, PC) shaped in the form of a mirror unit. The mirror unit MU is connected with a shaft SH of a motor MT, and, is configured to be driven and rotated.

Next, an object detecting operation of the laser radar LR is described. In Fig. 2 and Fig. 3, a diverging light flux emitted in a pulse form from the semiconductor laser LD is converted into an approximately parallel light flux SB by the collimating lens CL, enters the first mirror surface M1 of the rotating mirror unit MU, is reflected here, further is reflected on the second mirror surface M2, thereafter, passes through the transparent plate TR, and is projected toward an external object OBJ side so as to scan as a laser spot light flux with, for example, a longitudinally-long cross section (a cross section in which a direction orthogonal to scanning is longer than the scanning direction.

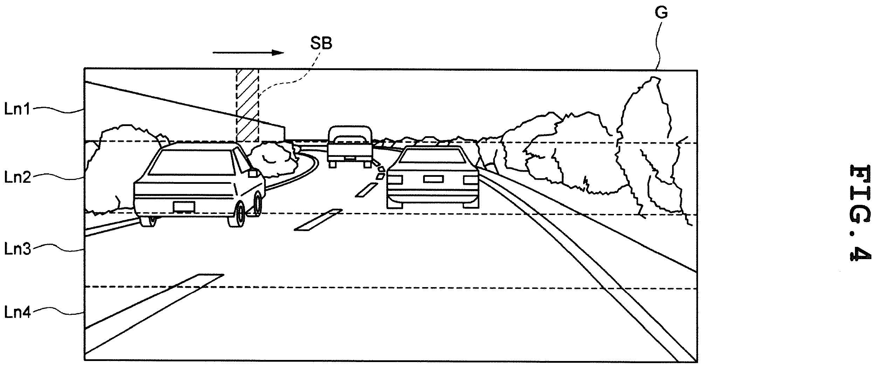

Fig. 4 is an illustration showing a state of scanning within a detection rage G of the laser radar LR with an outgoing laser spot light flux SB (indicated with hatching) correspondingly to the rotation of the mirror unit MU. In combinations of the first mirror surface M1 and the second mirror surface M2 of the mirror unit MU, the intersecting angle is different for each of the combinations. The laser spot light flux is reflected sequentially by the rotating first mirror surface M1 and second mirror surface M2. First, the laser spot light flux reflected by the first mirror surface M1 and the second mirror surface M2 of the first pair is made to scan in the horizontal direction from the left to the right on the top region Ln1 of the detection range G correspondingly to the rotation of the mirror unit MU. Next, the laser spot light flux reflected by the first mirror surface M1 and the second mirror surface M2 of the second pair is made to scan in the horizontal direction from the left to the right on the second region Ln2 from the top of the detection range G correspondingly to the rotation of the mirror unit MU. Next, the laser spot light flux reflected by the first mirror surface M1 and the second mirror surface M2 of the third pair is made to scan in the horizontal direction from the left to the right on the third region Ln3 from the top of the detection range G correspondingly to the rotation of the mirror unit MU. Next, the laser spot light flux reflected by the first mirror surface M1 and the second mirror surface M2 of the fourth pair is made to scan in the horizontal direction from the left to the right on the lowermost region Ln4 of the detection range G correspondingly to the rotation of the mirror unit MU. With this, one scanning for the whole detection range G is completed. Successively, after the mirror unit MU has rotated one time, when the first mirror surface M1 and the second mirror surface M2 of the first pair returns, the scanning is repeated again from the top region Ln1 to the lowermost region Ln4 of the detection range G.

In Fig. 2 and Fig. 3, among the light flux having been projected so as to scan, some of the scattered light flux scattered by hitting on the object passes through again the transparent plate TR, enters the second mirror surface M2 of the mirror unit MU in the casing CS, is reflected here, further, is reflected on the first mirror surface M1, thereafter, is collected by the lens LS, and is detected by the light receiving surface of the photodiode PD. A time difference between the time of being emitted by the semiconductor laser LD and the time of being detected by the photodiode PD is acquired in a not-illustrated circuit, whereby a distance to the object OBJ can be known.

However, even if the scattered light flux from the object OBJ is reflected on the whole surface of each of the second mirror surface M2 and the first mirror surface M1, the scattered light flux is narrowed by the lens LS (in here, it is made a circle, however, not limited to the circle) functioning as an aperture stop. Accordingly, a light flux finally entering the photodiode PD become a part of the light flux. That is, among the scattered light flux having come from the object and having entered through the window portion WS, only a light flux indicated with hatching is collected by the lens LS, and, received by the photodiode PD. Here, it is assumed that the light flux to be collected by the lens SL is called a received light flux RB. As shows with a one-dot chain line in Fig. 3, a received light flux RB with a predetermined cross section is configured to enter the lens LS through the second mirror surface M2 and the first mirror surface M1. As is clear from the figure, in comparison of each other on the first mirror surface, the area of the received light flux RB is larger than the area of the outgoing light flux SB.

By the way, in order to improve the utilization efficiency of mirror surfaces while contemplating the miniaturization of the mirror unit MU, it is desirable to reflect almost all of a light flux reflected by the first mirror surface M1, by the second mirror surface M2. Hereinafter, a constitution that has such an effect, will be described.

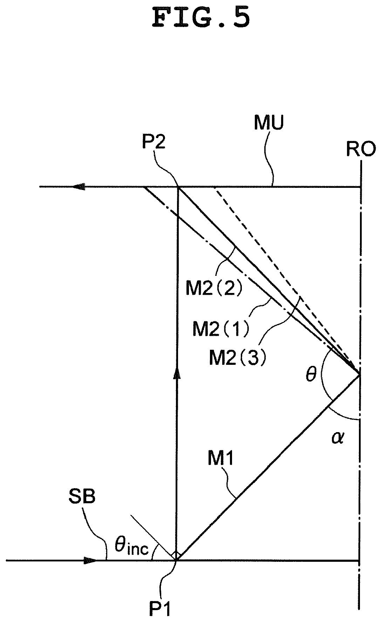

Fig. 5 is a cross sectional view that passes through the rotation axis line RO of the mirror unit MU of the present embodiment. However, it shows only one side. In the example of Fig. 5, it is assumed that an intersecting angle between the first mirror surface M1 and the second mirror surface M2 is changed for each pair by changing the inclination of the second mirror surface M2 relative to the rotation axis line RO without changing the inclination of the first mirror surface M1 relative to the rotation axis line RO.

In Fig. 5, the inclination angle $\alpha$ of the first mirror surface M1 to the rotation axis line RO is 45 degrees. Moreover, in the second mirror surface M2(2) indicated with a solid line, an intersecting angle $\theta$ relative to the first mirror surface M1 is 90 degrees. In contrast to this, it is assumed that, in the second mirror surface M2(1) indicated with a one-dot chain line, an intersecting angle $\theta$ relative to the first mirror surface M1 is less than 90 degrees, and in the second mirror surface M2(3) indicated with a broken line, an intersecting angle $\theta$ relative to the first mirror surface M1 exceeds 90 degrees.

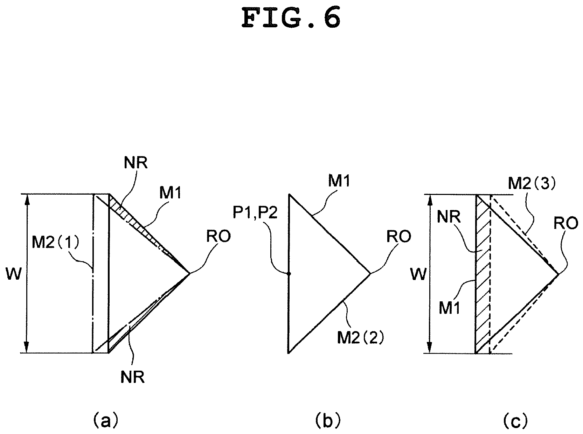

Fig. 6 is a schematic diagram (the mirror surfaces are illustrated simply with a triangle for easy understanding) showing the first mirror surface M1 and the second mirror surface M2 in a state of projecting them in the rotation axis line RO direction. A portion (a) shows a combination of the projected images of the second mirror surface M2(1) and the first mirror surface M1, a portion (b) shows a combination of the projected images of the second mirror surface M2(2) and the first mirror surface M1, and a portion (c) shows a combination of the projected images of the second mirror surface M2(3) and the first mirror surface M1.

As shown in Fig. 6(b), the projected images of the first mirror surface M1 and the second mirror surface M2(2) overlap perfectly with each other. Therefore, even in the case where an outgoing light flux SB is reflected on a portion (for example, a point P1) in the vicinity of an edge of the first mirror surface M1 as shown in Fig. 5, since the light flux can be reflected on a portion (for example, a point P2) in the vicinity of an edge of the second mirror surface M2(2), it can be said that it is most efficient.

On the contrary to this, the projected image of the second mirror surface M2(1) protrudes over a side separated away from the rotation axis line RO relative to the projected image of the first mirror surface M1 as shown with a one dot-chain line in Fig. 6(a). Even in this case, in the case of considering easiness in manufacture and balance in rotation, it is desirable to limit the outer figure of the mirror unit MU. Therefore, it is wanted that the width W of the second mirror surface M2(1) is made equal to the width of the first mirror surface M1. In such a case, the projected image of the first mirror surface M1 becomes to have a non-overlapped region NR where the projected image does not overlap with the projected image of the second mirror surface M2(1) as shown with hatching. This means that in the case where light reflected on the non-overlapped region NR of the first mirror surface M1 proceeds along the rotation axis line RO, the light is not reflected on the second mirror surface M2(1), which causes light flux missing, and, results in that the light flux is not used for detection.

Moreover, the projected image of the second mirror surface M2(3) becomes close to the rotation axis line RO relative to the projected image of the first mirror surface M1 as shown with a broken line in Fig. 6(c). Even in this case, in the case of considering easiness in manufacture and balance in rotation, it is desirable to limit the outer figure of the mirror unit MU. Therefore, it is wanted that the width W of the second mirror surface M2(3) is made equal to the width of the first mirror surface M1. In such a case, the projected image of the first mirror surface M1 becomes to have a non-overlapped region NR where the projected image does not overlap with the projected image of the second mirror surface M2(3) as shown with hatching. This means that in the case where light reflected on the non-overlapped region NR of the first mirror surface M1 proceeds along the rotation axis line RO, the light is not reflected on the second mirror surface M2(3), which causes light flux missing, and, results in that the light flux is not used for detection.

Then, the present inventors found out, as a result of dedicated research, that an incident angle $\theta$ inc (degrees), of an outgoing light flux emitted from the light source relative to the first mirror surface satisfies a formula shown below. The incident angle $\theta$ inc is assumed as an angle formed by an outgoing light flux and the normal line to the first mirror surface on a cross section passing through the rotation axis line RO (refer to Fig. 5).

$$\theta/2 - 7 < \theta \text{inc} < \theta/2 + 11 \qquad (1)$$

provided that $\theta$: an intersecting angle formed by the first mirror surface and the second mirror surface (degree)

Here, it is assumed that $\theta$ is an intersecting angle between the first mirror surface M1 and the second mirror surface M2, in the case where the incident angle $\theta$inc of an outgoing light flux relative to the first mirror surface is equal to $\theta/2$, it results in that light reflected by the first mirror surface M1 is theoretically reflected by the second mirror surface M2. However, even if the incident angle $\theta$inc is not strictly coincident with $\theta/2$, in the case where the efficiency can be substantially secured, it is permissible in view of actual use. The formula (1) shows an allowable range of the incident angle $\theta$inc. In the following, the reasons for that are described.

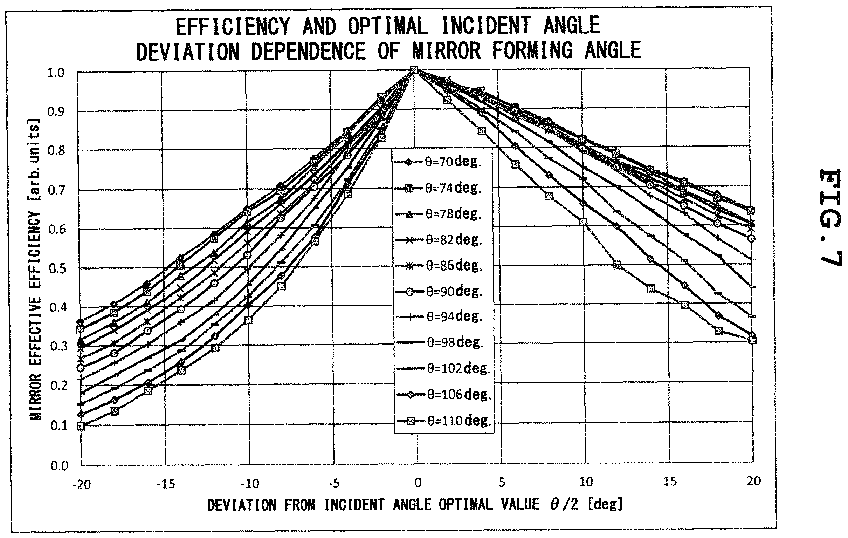

Fig. 7 is a graph showing the effective efficiency of a mirror taken on the longitudinal axis and a deviation from an optimal incident angle ($\theta/2$) taken on the transverse axis, and, shows the result of a simulation performed by the present inventors with regard to "efficiency and optimal incident angle deviation dependence of mirror intersecting angle". In the case where all the light reflected by the first mirror surface M1 is reflected by the second mirror surface M2, the effective efficiency of the mirror is set to 1.0. However, an optimal incident angle changes accordingly to an intersecting angle. For example, in the case of the intersecting angle $\theta = 90$ degrees, when the incident angle $\theta$ inc is $\theta/2 = 90$ degrees/2 = 45 degrees, the effective efficiency of the mirror becomes a peak. On the other hand, in the case of the intersecting angle $\theta = 86$ degrees, when the incident angle $\theta$inc is $\theta/2 = 86$ degrees/2 = 43 degrees, the effective efficiency of the mirror becomes a peak. In contrast to this, in the case of the intersecting angle $\theta = 94$ degrees, when the incident angle $\theta$ inc is $\theta/2 = 94$ degrees/2 = 42 degrees, the effective efficiency of the mirror becomes a peak. Then, the above results are summarized in Fig. 7. As a result, it turned out that, in any of the mirror intersecting angles $\theta$, in the case where an amount of deviation from the optimal incident angle is 0, a peak comes, and the efficiency gradually decreases before and after that. Here, in the graph of Fig. 7, in the case of the mirror intersecting angle $\theta = 110$ degree, as compared with the case of the mirror intersecting angle is equal to or less than it, the degree of the lowering of the efficiency relative to the amount of deviation from the optimal incident angle becomes the largest. On the other hand, in the case where the effective efficiency of the mirror exceeds 0.5, it is allowed in terms of practical use. Accordingly, even in the case of the mirror intersecting angle $\theta = 110$ degree, in order to secure the effective efficiency of 0.5 or more, it turns out that it may be permissible to suppress an amount of deviation of an incident angle $\theta$inc from $\theta/2$ at least to -7 degrees to less than +11 degrees. Therefore, it can be said that the incident angle $\theta$ inc made to satisfy the formula (1) is permissible.

In this connection, in the case where the intersecting angle $\theta$ between the first mirror surface M1 and the second mirror surface M2 is made 95 degrees or more, it is preferable, because scanning can be performed at a wide angle in a direction orthogonal to the scanning. It is more preferable to make the intersecting angle $\theta$ 100 degrees or more. For example, in the case of the mirror intersecting angle $\theta = 102$ degrees, according to the graph of Fig. 7, if an amount of deviation of an incident angle $\theta$inc from $\theta/2$ is suppressed to -8 degrees to less than that +16 degrees, the efficiency of 0.5 or more can be secured.

Here, in the case of a plurality of pairs of the first mirror surface and the second mirror surface, like the example of Fig. 5, while fixing the inclination angle of the first mirror surface, the semiconductor laser LD serving as a light source is made to swing and displace for each mirror pair within a cross section passing through the rotation axis line, whereby it is possible to change the incident angle $\theta$ inc correspondingly to the intersecting angle 6. Although it can be said that such a constitution is within the range of the embodiment according to the present invention, it is necessary to dispose a complicated mechanism to make a light source swing. Then, after fixing the semiconductor laser LD (its optical axis), in accordance with the formula (1), the inclination angle $\alpha$ of the first mirror surface relative to the rotation axis line is changed for each pair so as to become the optimal incident angle $\theta$ inc correspondingly to the intersecting angle $\theta$. As a result, since the constitution can be simplified while securing the effective efficiency of the mirror, it is desirable. Provided that, the first mirror surface and the second mirror surface are not limited to the multiple pairs, and, even in the case of only one pair, it is preferable to be made to satisfy the formula (1). Moreover, in the case of a plurality of pairs of the first mirror surface and the second mirror surface, it is desirable that the intersecting angle $\theta$ satisfies the formula (1) in all the pairs.

Moreover, as shown in Fig. 2, in comparison of each other on the first mirror surface M1, although the area DA of the received light flux RB is larger than the area SA of the outgoing light flux SB, it is preferable that the both satisfy a conditional formula (2) shown below.

$$1 < DA/SA \leq 53 \qquad (2)$$

In the case of being less than the lower limit of the conditional formula (2), the received light flux becomes too small so that reflected light becoming a signal cannot be received sufficiently. Moreover, in the case of being more than the upper limit, the light receiving system becomes too large so that an optical system becomes too large. Moreover, since a focal distance becomes long inevitably, in order to obtain a required angle of view, the area of a sensor becomes large. As a result, electrical noise becomes large, and S/N gets worse. Moreover, the specific examples of the received light flux area DA and the outgoing (projecting) light flux area SA are as follows.

(a) DA: 880 mm2, SA: 29 mm2, DA/SA = 30.34
(b) DA: 30 mm2, SA: 29 mm2, DA/SA = 1.03
(c) DA: 1519 mm2, SA: 29 mm2, DA/SA = 52.38

In this connection, it is preferable that DA/SA satisfies a conditional formula (3) shown below.

$$10 \leq DA/SA \leq 40 \qquad (3)$$

The present invention should not be limited to the embodiments described in the specification, and it is clear for a person skilled in the art from the embodiment and the technical concept written in the present specification that the present invention includes the other embodiment and modified examples. The description and embodiment in the specification are prepared merely for the purpose of exemplification, and the scope of the present invention is shown by the claims mentioned later. For example, the contents of the present invention having been described by using the drawings can be applied to all the embodiments, and can be applied to crime prevention sensors to detect suspicious persons by being loaded onto aircrafts, such as a helicopter, or by being installed in a building and etc. Moreover, in the above-mentioned embodiment, description has been given those that the semiconductor laser is used as the light source. However, the present invention should not be limited to this, and it is needless to say that an LED or the like may be used as the light source.

**Reference Signs List**

| | |
|---|---|
| 1 | vehicle |
| 1a | front window |
| 1b | front grille |
| CL | collimating lens |
| CS | casing |
| G | detection range |
| LD | semiconductor laser |
| Ln1 to Ln4 | region |
| LPS | light projecting system |
| LR | laser radar |
| LS | lens |
| M1 | first mirror surface |
| M2 | second mirror surface |
| MT | motor |
| MU | mirror unit |
| OBJ | object |
| PD | photodiode |
| RB | received light flux |
| RO | rotation axis |
| RPS | light receiving system |
| SB | laser spot light flux (outgoing light flux) |
| SH | shaft |
| TR | transparent plate |
| WS | window portion |

**Claims**

1. An optical scan type object detecting apparatus, comprising:

   a mirror unit in which a first mirror surface and a second mirror surface are formed so as to incline in a direction to intersect with a rotation axis and to face each other at a predetermined angle; a light source; and a light receiving element,
   **characterized in that** a light flux emitted from the light source is reflected by the first mirror surface, thereafter, is reflected by the second mirror surface, and is projected so as to scan by rotation of the mirror unit,
   a part of a light flux scattered by an object among the light flux projected so as to scan is reflected by the second mirror surface, thereafter, is reflected by the first mirror surface, and is received by the light receiving element, and that
   an area of the light flux scattered by the object and received by the light receiving element becomes larger than an area of the light flux projected so as to scan, in comparison of each other on the first mirror surface, and
   an incident angle $\theta$ inc (degrees) of the light flux emitted from the light source relative to the first mirror surface satisfies a formula (1) shown below.

   $$\theta/2 - 7 < \theta inc < \theta/2 + 11 \qquad (1)$$

   provided that, $\theta$: an intersecting angle (degrees) formed by the first mirror surface and the second mirror surface

2. The optical scan type object detecting apparatus according to claim 1, **characterized in that** the mirror unit includes a plurality of pairs of the first mirror surface and the second mirror surface, and the intersecting angle between the first mirror surface and the second mirror surface is different for each of the pairs.

3. The optical scan type object detecting apparatus according to claim 2, **characterized in that** an optical axis of the light source is fixed relative to a rotation axis of the mirror unit, and an inclination angle of the first mirror surface relative to the rotation axis of the mirror unit is different for each of the first mirror surfaces.

4. The optical scan type object detecting apparatus according to any one of claims 1 to 3, **characterized in that** a conditional formula (2) shown below is satisfied.

   $$1 < DA/SA \leq 53 \qquad (2)$$

   provided that

   DA: an area of a light flux received by the light receiving element
   SA: an area of a light flux projected so as to scan

# FIG.1

# FIG.2

# FIG.3

# FIG.4

# FIG.5

# FIG.6

(a)                 (b)                 (c)

# FIG.7

EFFICIENCY AND OPTIMAL INCIDENT ANGLE
DEVIATION DEPENDENCE OF MIRROR FORMING ANGLE

θ=70deg.
θ=74deg.
θ=78deg.
θ=82deg.
θ=86deg.
θ=90deg.
θ=94deg.
θ=98deg.
θ=102deg.
θ=106deg.
θ=110deg.

MIRROR EFFECTIVE EFFICIENCY [arb. units]

DEVIATION FROM INCIDENT ANGLE OPTIMAL VALUE $\theta/2$ [deg]

## INTERNATIONAL SEARCH REPORT

| | International application No. |
|---|---|
| | PCT/JP2017/003329 |

A. CLASSIFICATION OF SUBJECT MATTER
*G01S7/481*(2006.01)i, *G02B26/12*(2006.01)i

According to International Patent Classification (IPC) or to both national classification and IPC

B. FIELDS SEARCHED

Minimum documentation searched (classification system followed by classification symbols)
G01S7/48-7/51, G01S17/00-17/95, G02B26/10-26/12

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2014/168137 A1 (Konica Minolta, Inc.), 16 October 2014 (16.10.2014), paragraphs [0001] to [0005], [0014] to [0063]; fig. 1, 5 to 28 & JP 2015-180956 A & US 2016/0047902 A1 paragraphs [0001] to [0005], [0017] to [0097]; fig. 1, 5 to 28 & EP 2985650 A1 | 1–4 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 March 2017 (27.03.17) | 04 April 2017 (04.04.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**EP 3 413 079 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S50109737 A

- WO 2014168137 A